# EUROPÄISCHE PATENTSCHRIFT

(11) **EP 2 045 339 B1**
(45) Veröffentlichungstag und Bekanntmachung des Hinweises auf die Patenterteilung: **14.11.2012**
(21) Anmeldenummer: 08015987.4
(22) Anmeldetag: 11.09.2008
(51) Int. Cl.: C21D 1/06, C21D 9/40

(54) **Für eine Wälzbeanspruchung ausgebildetes Werkstück aus durchhärtendem Stahl und Verfahren zur Wärmebehandlung**
Workpiece for rolling wear stress made of through hardened steel and method of heat treatment
Pièce soumise à une usure par roulement en acier endurci et méthode de traitement thermique

(30) Priorität: 20.09.2007 DE 102007044950
(43) Veröffentlichungstag der Anmeldung: 08.04.2009
(73) Patentinhaber: AB SKF, 415 50 Göteborg (SE)
(72) Erfinder: Volkmuth, Johann, 97618 Niederlauer (DE); Jung, Michael, 97076 Würzburg (DE)
(74) Vertreter: Kohl, Thomas

(56) Entgegenhaltungen:
- EP-A- 1 070 760
- WO-A-00/36164
- WO-A-2006/013055
- DE-B3-102004 037 074
- US-B1- 6 203 634
- VON BERGEN R T ET AL: "Effect of lower bainite on rolling contact fatigue of bearing steels" ADVANCED IN THE PHYSICAL METALLURGY AND APPLICATIONS OF STEELS, XX, XX, 21. September 1981 (1981-09-21), Seiten 105-110, XP002118510
- HOLLOX G E ET AL: "Lower bainite bearings for adverse environments" WEAR, LAUSANNE, CH, Bd. 68, 1. Januar 1981 (1981-01-01), Seiten 229-240, XP002125820

## Beschreibung

Die Erfindung betrifft ein für eine Wälzbeanspruchung ausgebildetes Werkstück aus durchhärtendem Stahl. Weiterhin betrifft die Erfindung ein Verfahren zur Wärmebehandlung von derartigen Werkstücken.

Verfahren zur Wärmebehandlung von Werkstücken aus Stahl sind in vielfältigen Ausführungen bekannt. Die Wärmebehandlung dient insbesondere der Erhöhung der Härte der Werkstücke. Dabei hat die Art der Wärmebehandlung großen Einfluss auf die Eigenschaften der Werkstücke, so dass die Wahl eines geeigneten Wärmebehandlungsverfahrens, neben der Wahl einer geeigneten Zusammensetzung des Stahls, von wesentlicher Bedeutung für die Gebrauchsdauer der Werkstücke ist. Dies gilt im besonderen Maße für Werkstücke, die hohe Qualitätsanforderungen erfüllen müssen und über eine lange Einsatzzeit hohen Beanspruchungen ausgesetzt sind. Bei derartigen Werkstücken kann die Qualität sehr empfindlich von den Details der Wärmebehandlung abhängen.

Aus der DE 101 61 721 B4 ist ein Wärmebehandlungsverfahren für eine Wälzlagerkomponente aus einem durchhärtenden Stahl bekannt, bei dem zunächst eine Carbonitrierung bei 860°C bis 930°C durchgeführt wird. Dann folgt eine Austenitisierung bei 830°C bis 860°C mit anschließender Abschreckung auf 190°C bis 230°C. Schließlich wird eine isotherme Umwandlung zwischen 190°C und 230°C durchgeführt und danach auf Raumtemperatur abgekühlt. Auf diese Weise soll erreicht werden, dass die Gefügeumwandlung im Kern und in der Randschicht des Bauteils unterschiedlich abläuft und dadurch im Kern ein Restaustenitgehalt von weniger 5 Vol.-% und in der Randschicht ein Restaustenitgehalt von mehr als 10 Vol.-% erzielt wird.

Aus der DE 198 49 681 C1 ist ein Verfahren zur Wärmebehandlungen von Werkstücken aus Stahl oder Gusseisen bekannt, bei dem nach einem Austenitisieren ein rasches Abschrecken bis etwa zum Martensit-Startpunkt folgt. Anschließend werden die Bauteile auf Bainit-Umwandlungstemperatur gehalten, bis eine gewünschte Teilumwandlung des Gefüges in Bainit erfolgt ist. Dann folgen ein rasches Abkühlen auf Raumtemperatur, ein kurzes Halten bei Raumtemperatur und ein Kurzzeitanlassen.

WO 2006/013 055 betrifft ein Verfahren zur Wärmebehandlung von Werkstücken aus Stahl durch ein thermochemischen Diffusionsverfahren einer Glühbehandlung, Härtung oder Bainitiesierung.

Der Erfindung liegt die **Aufgabe** zugrunde, ein wälzbeanspruchtes Werkstück aus Stahl so zu auszubilden, dass es eine hohe Verschleißfestigkeit, Härte, Zähigkeit und Dimensionsstabilität aufweist.

Diese Aufgabe wird durch ein Werkstück mit der Merkmalskombination des Anspruchs 1 gelöst.

Das erfindungsgemäße Werkstück ist für eine Wälzbeanspruchung ausgebildet und weist eine Kernzone und eine carbonitrierte Randzone auf, welche die Kernzone umgibt. Das Werkstück ist aus einem durchhärtenden Stahl gefertigt. Die Kernzone des Werkstücks weist ein Bainit-Gefüge auf. Das Werkstück zeichnet sich dadurch aus, dass seine Randzone als Hauptbestandteil ein Mischgefüge aus Martensit und Bainit aufweist und der Volumenanteil des Martensits in der Randzone wenigstens 20 Vol.-% beträgt.

Beim erfindungsgemäßen Werkstück werden die Vorzüge des Bainit-Gefüges und des Martensit-Gefüges in einer vorteilhaften Weise kombiniert. Das Bainit-Gefüge in der Kernzone hat eine hohe Zähigkeit und Dimensionsstabilität zur Folge. Das Mischgefüge aus Martensit und Bainit in der Randzone ergibt eine hohe Härte und Verschleißfestigkeit. Durch diese Kombination ergibt sich ein sehr haltbares und verschleißfestes Werkstück, das auch bei einer Mangelschmierung oder anderweitig ungünstigen Umgebungsbedingungen, wie Schmutzeinwirkung usw., in der Regel nicht gleich schaden nimmt.

Vorzugsweise weist die Randzone das Mischgefüge aus Martensit und Bainit als Hauptbestandteil auf.

Das Werkstück kann insbesondere als ein Wälzlagerbauteil ausgebildet sein. Bei dem durchhärtenden Stahl kann es sich um einen durchhärtenden Wälzlagerstahl, insbesondere nach DIN EN ISO 683-17, handeln. Besonders vorteilhaft ist ein Stahl der Sorte 100Cr6 oder ein höher legiertes Derivat.

Die Kernzone des Werkstücks kann neben Bainit Karbide und/oder Restaustenit enthalten. Dabei ist es hinsichtlich der Dimensionsstabilität vorteilhaft, wenn die Kernzone einen Restaustenitgehalt von maximal 10 Vol.-%, insbesondere maximal 3 Vol.-%, aufweist.

Die Randzone des Werkstücks kann neben Martensit Karbide und/oder Restaustenit und/oder Bainit und/oder Nitride enthalten. Insbesondere muss die Randzone einen Restaustenitgehalt aufweisen, der um 5 Vol.-% bis 40 Vol.-% höher ist als der Restaustenitgehalt der Kemzone. Vorzugsweise weist die Randzone einen Restaustenitgehalt von wenigstens 10 Vol.-% auf. Weiterhin kann die Randzone einen Stickstoffgehalt von wenigstens 0,1 Gew.-% und höchstens 0,8 Gew.-% aufweisen.

Die Randzone kann an die Oberfläche des Werkstücks angrenzen. Zudem kann die Randzone eine Dicke von wenigstens 100 µm aufweisen. Weiterhin kann die Randzone eine Dicke von höchstens 800 µm, vorzugsweise höchstens 600 µm aufweisen. Eine derart dimensionierte Randzone bietet einen guten Verschleißschutz, wobei sich gleichzeitig etwaige Auswirkungen auf die Dimensionsstabilität des Werkstücks in Grenzen halten. Ebenso ist es im Hinblick auf die Dimensionsstabilität des Werkstücks von Vorteil, wenn die Kernzone ein größeres Volumen aufweist als die Randzone.

Die Randzone des Werkstücks kann Druckeigenspannungen zwischen -600 MPa und -100 MPa aufweisen. Dies wirkt sich positiv auf die Haltbarkeit des Werkstücks aus. Weiterhin ist es von Vorteil, wenn die Randzone eine Härte aufweist, die wenigstens um 50 HV1 über der Härte der Kernzone liegt. Da ein Wälzkontakt jeweils mit der Randzone und nicht mit der Kernzone ausgebildet wird, hängt das Verschleißverhalten primär von den Eigenschaften der Randzone ab. Eine hohe Härte wirkt sich in der Regel positiv auf das Verschleißverhalten aus. Dies gilt insbesondere unter Betriebsbedingungen, bei denen im Bereich des Wälzkontakts Fremdpartikel vorliegen können. Allerdings gehen mit einer sehr hohen Härte meist auch negative Eigenschaften einher. Beispielsweise lässt sich keine allzu hohe Zähigkeit erreichen. Daher ist es sinnvoll, eine sehr hohe Härte lokal nur in der Randzone vorzusehen und in der Kernzone eine niedrigere Härte vorzusehen. Das Werkstück weist bevorzugt eine Oberflächenhärte von wenigstens 60 HRC auf.

Die Randzone des Werkstücks kann eine erste Schicht aufweisen, die frei von Karbiden ist. Die erste Schicht kann an die Werkstückoberfläche angrenzen. Weiterhin kann die erste Schicht eine Dicke von höchstens 250 µm besitzen. Zudem kann die Randzone des Werkstücks eine zweite Schicht aufweisen, die Karbide enthält. Die zweite Schicht kann zwischen der ersten Schicht und der Kernzone angeordnet sein.

Beim erfindungsgemäßen Verfahren zur Wärmebehandlung von wälzbeanspruchten Werkstücken aus durchhärtendem Stahl wird eine Randzone der Werkstücke carbonitriert. Weiterhin wird in einer Kernzone der Werkstücke, die von der Randzone umschlossen wird, durch Lagern der Werkstücke während eines ersten Zeitintervalls innerhalb eines ersten Temperaturbereichs eine Umwandlung in ein Gefüge durchgeführt, das als Hauptbestandteil Bainit enthält. Die Besonderheit des erfindungsgemäßen Verfahrens besteht darin, dass nach dem ersten Zeitintervall in der Randzone der Werkstücke eine Umwandlung in ein Gefüge durchgeführt wird, das einen Volumenanteil an Martensit von wenigstens 20 Vol.-% enthält, indem die Werkstücke von einer Temperatur im ersten Temperaturbereich auf eine Temperatur in einem zweiten Temperaturbereich abgekühlt werden, dass die legierungsabhängige kritische Abkühlgeschwindigkeit überschritten wird..

Die Werkstücke können während eines zweiten Zeitintervalls innerhalb des zweiten Temperaturbereichs gelagert werden. Zudem können die Werkstücke auf eine Temperatur innerhalb eines dritten Temperaturbereichs erwärmt werden und innerhalb eines dritten Zeitintervalls bei einer Temperatur innerhalb des dritten Temperaturbereichs angelassen werden. Dies führt zu einer gewissen Stabilisierung des Gefüges.

Die Carbonitrierung kann bei Temperaturen zwischen 840°C und 890°C durchgeführt werden. Bevorzugt wird die Carbonitrierung in einer Atmosphäre durchgeführt, die zwischen 1 und 20 Vol.-% Ammoniak enthält und einen C-Pegel zwischen 0,8 und 1,2 aufweist.

Der erste Temperaturbereich kann sich zwischen 210°C und 260°C erstrecken. Der zweite Temperaturbereich kann sich zu hohen Temperaturen hin maximal bis 120°C erstrecken. Ebenso ist es auch möglich, dass sich der zweite Temperaturbereich zu hohen Temperaturen hin maximal bis zu einer Temperatur von 10°C oder lediglich bis zu einer Temperatur von -50°C erstreckt. Tiefe Temperaturen des zweiten Temperaturbereichs haben eine besonders hohe Härte der Randzone der Werkstücke zur Folge. Der dritte Temperaturbereich kann sich zwischen 150°C und 300°C erstrecken.

Das erste Zeitintervall kann zwischen 3 und 5 Stunden betragen. Das zweite Zeitintervall ergibt sich aus der für die Einstellung einer über den Werkstückquerschnitt gleichmäßigen Temperaturverteilung notwendigen Zeitdauer. Für das dritte Zeitintervall eignen sich insbesondere Werte zwischen 1 und 4 Stunden..

Für das erfindungsgemäße Verfahren wird vorzugsweise ein durchhärtender Stahl mit einem Kohlenstoffgehalt zwischen 0,8 Gew.-% und 1,2 Gew.-% verwendet.

Die Erfindung wird nachstehend anhand der in der Zeichnung dargestellten Ausführungsbeispiele erläutert.

Es zeigen:
- Figur 1: ein erfindungsgemäß ausgebildetes Werkstück in einer schematischen Schnittdarstellung und
- Figur 2: ein schematisiertes Temperatur-Zeit-Diagramm zur Veranschaulichung einer möglichen Vorgehensweise im Rahmen des erfindungsgemäßen Wärmebehandlungsverfahrens.

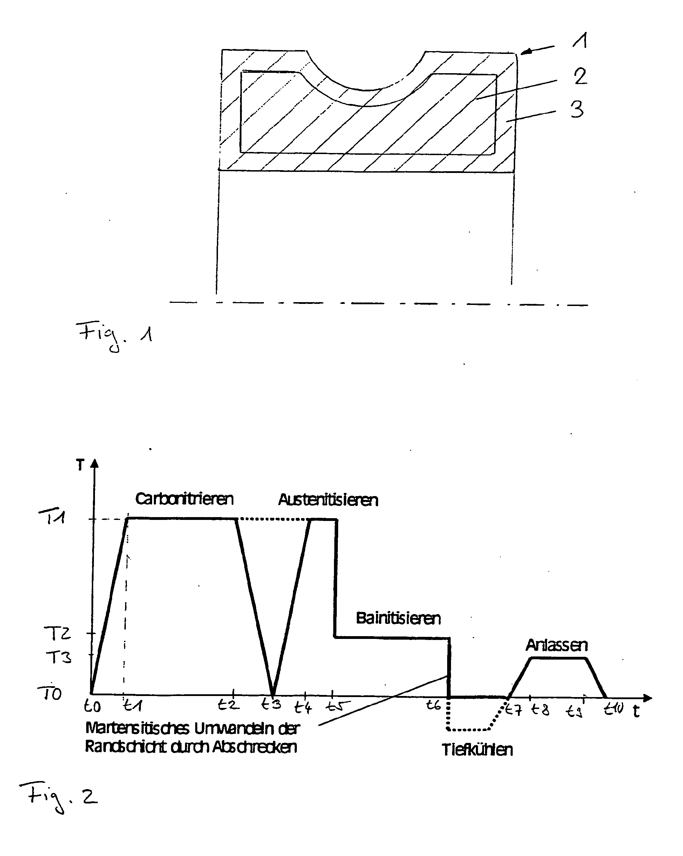

Figur 1 zeigt ein erfindungsgemäß ausgebildetes Werkstück 1 in einer schematischen Schnittdarstellung. Die Darstellung ist nicht maßstabsgetreu und stellt die Verhältnisse idealisiert dar. Bei dem in Figur 1 dargestellten Ausführungsbeispiel handelt es sich um einen Innenring eines Kugellagers. Ebenso könnte das Werkstück 1 auch eine sonstige Komponente des Kugellagers sein, wie beispielsweise ein Außenring oder ein Wälzkörper. Weiterhin kann das Werkstück 1 auch eine Komponente eines anderen Lagertyps oder eine sonstige wälzbeanspruchte Komponente, wie beispielsweise ein Zahnrad, sein.

Das Werkstück 1 weist eine Kernzone 2 und eine Randzone 3 auf, die sich hinsichtlich ihres Gefüges unterscheiden. Die Randzone 3 grenzt an die Oberfläche des Werkstücks 1 an und umschließt die Kernzone 2. Dabei beträgt die Dicke der Randzone 3 in der Regel zwischen 100 µm und 800 µm, vorzugsweise zwischen 100 µm und 600 µm. Zwischen der Kernzone 2 und der Randzone 3 ist in der Regel kein scharfer Übergang ausgebildet. Stattdessen ändert sich das Gefüge allmählich innerhalb eines Übergangsbereichs. Die Zusammensetzung der Kernzone 2 und der Randzone 3 wird im Folgenden noch näher erläutert.

Figur 2 zeigt ein schematisiertes Temperatur-Zeit-Diagramm zur Veranschaulichung einer möglichen Vorgehensweise im Rahmen des erfindungsgemäßen Wärmebehandlungsverfahrens. Auf der Abszisse ist die Zeit, auf der Ordinate die Werkstücktemperatur aufgetragen. Aus Gründen der Anschaulichkeit ist der Kurvenverlauf in einer abstrahierten Form wiedergegeben und bereichsweise zeitlich gestreckt bzw. komprimiert dargestellt.

Die Werkstücke 1, bei denen die Wärmebehandlung durchgeführt wird, bestehen aus einem durchhärtenden Stahl, beispielsweise aus einem Wälzlagerstahl gemäß der Norm DIN EN ISO 683-17, insbesondere aus einem niedrig legierten Wälzlagerstahl. Der in der Figur 2 beispielhaft dargestellte Temperaturverlauf bezieht sich auf die Wärmebehandlung von Werkstücken 1 aus einem Stahl mit der Bezeichnung 100Cr6. Dieser Stahl enthält, bezogen auf seine Masse, 0,93 bis 1,05 % Kohlenstoff, 1,35 bis 1,60 % Chrom, 0,25 bis 0,45 % Mangan, 0,15 bis 0,35 % Silizium und bis zu 0,1 % Molybdän. Der Phosphorgehalt beträgt maximal 0,025 %, der Schwefelgehalt maximal 0,015 %. Außerdem können herstellungsbedingt noch kleine Mengen an weiteren Elementen enthalten sein.

Vor der Wärmebehandlung werden die Werkstücke 1 einer mechanischen Weichbearbeitung unterzogen, durch welche die Werkstücke 1 in eine gewünschte Form gebracht werden. Diese Form kann noch um Zugaben für eine weitere mechanische Bearbeitung nach der Wärmebehandlung von der endgültigen Form der Werkstücke 1 abweichen.

Gemäß der Darstellung der Figur 2 beginnt die Wärmebehandlung damit, dass die Werkstücke 1 für die Durchführung einer Carbonitrierung beginnend bei einem Zeitpunkt t0 bis zu einem Zeitpunkt t1 von einer Temperatur T0 auf eine auf eine Temperatur T1 aufgeheizt werden. Bei der Temperatur T0 kann es sich um Raumtemperatur handeln. Als ein konkreter Wert kann für die Raumtemperatur eine Temperatur von 20°C zugrunde gelegt werden, falls nichts anderes vermerkt ist. Die Temperatur T1 weist beispielsweise einen Wert zwischen 840°C und 890°C auf.

Die Carbonitrierung wird in einer kohlenstoff- und stickstoffhaltigen Atmosphäre durchgeführt. Eine solche Atmosphäre kann zum Beispiel durch eine Ammoniakzugabe zwischen 1 und 20 Vol.-% und einen C-Pegel von 0,8 bis 1,2 ausgebildet werden.

Während der Carbonitrierung wird die Temperatur der Werkstücke 1 innerhalb des für die Temperatur T1 vorgesehenen Temperaturbereichs gehalten. Die Carbonitrierung wird im Zeitintervall zwischen dem Zeitpunkt t1 und einem Zeitpunkt t2 durchgeführt. Dieses Zeitintervall beträgt etwa 2 bis 8 Stunden.

Durch die Carbonitrierung wird die Randzone 3 mit Kohlenstoff und Stickstoff angereichert, so dass der Stickstoffgehalt in der Randzone 3 etwa 0,1 Gew.-% bis 0,8 Gew.-% und der Kohlenstoffgehalt in der Randzone 3 etwa 0,8 Gew.-% bis 1,2 Gew.-% beträgt.

Im Anschluss an die Carbonitrierung werden die Werkstücke 1 vom Zeitpunkt t2 bis zu einem Zeitpunkt t3 auf die Temperatur T0 abgekühlt. Bei der Temperatur T0 kann es sich wiederum um die Raumtemperatur handeln.

Danach werden die Werkstücke 1 auf Austenitisierungstemperatur gebracht, die beim dargestellten Verlauf der Temperatur T1 während der Carbonitrierung entspricht, d. h. im Temperaturbereich zwischen 840°C und 890°C liegt. Die Austenitisierungstemperatur wird ab einem Zeitpunkt t4 erreicht und bis zu einem Zeitpunkt t5 beibehalten.

Alternativ zu dieser Vorgehensweise kann sich die Austenitisierung ohne Zwischenabkühlung direkt an die Carbonitrierung anschließen, d. h. ab dem Zeitpunkt t2 beginnen.

Zum Zeitpunkt t5 werden die Werkstücke 1 rasch auf eine Temperatur T2 oberhalb der Martensit-Starttemperatur abgekühlt, so dass es nicht zu einer nennenswerten Bildung von Martensit kommt. Dieses rasche Abkühlen wird im Folgenden auch als Abschrecken bezeichnet und kann beispielsweise durch Kühlung der Werkstücke in geschmolzenem Salz erfolgen. Die Temperatur T2 kann beispielsweise einen Wert im Temperaturbereich von 210°C bis 260°C aufweisen. Die Temperatur T2 kann auch Werte außerhalb dieses Temperaturintervalls aufweisen. Auch diese Werte liegen oberhalb der Martensit-Starttemperatur.

Die Temperatur der Werkstücke 1 wird bis zu einem Zeitpunkt t6 konstant auf dem Wert T2 gehalten. Alternativ dazu ist es auch möglich, die Temperatur der Werkstücke 1 bis zum Zeitpunkt t6 zu variieren, insbesondere abzusenken. Dabei wird die Temperatur der Werkstücke 1 jeweils oberhalb der Martensit-Starttemperatur gehalten.

Das Zeitintervall zwischen den Zeitpunkten t5 und t6 dauert etwa 3 Stunden bis 5 Stunden. In diesem Zeitintervall wandelt sich das Gefüge in der Kernzone 2 der Werkstücke 1 wenigstens partiell von Austenit in Bainit um. In der Randzone 3 der Werkstücke 1 findet keine Umwandlung in Bainit statt oder es kommt nur in einem sehr geringen Ausmaß zu einer solchen Umwandlung. Jedenfalls weist die Kernzone 2 der Werkstücke 1 zum Zeitpunkt t6 einen wesentlich höheren Bainitgehalt auf als die Randzone 3. Der Unterschied in der Gefügeumwandlung der Kernzone 2 und der Randzone 3 wird insbesondere durch die Carbonitrierung der Randzone 3 verursacht. Die Carbonitrierung hat zur Folge, dass die Bainitumwandlung in der Randzone 3 gegenüber der Bainitumwandlung in der Kernzone 2 verzögert, d. h. erst nach einer längeren Haltezeit bei der Umwandlungstemperatur, stattfindet. Dies bedeutet, dass zu einem Zeitpunkt, zu dem die Bainitumwandlung in der Kernzone 2 bereits weit fortgeschritten ist, die Bainitumwandlung in der Randzone 3 noch gar nicht begonnen hat oder sich erst in einem Anfangsstadium befindet. Stoppt man die weitere Bainitumwandlung zu diesem Zeitpunkt, indem man die Werkstücke 1 abschreckt, so erhält man eine Kernzone 2 mit einem hohen Bainitgehalt und eine Randzone 3 mit einem geringen Bainitgehalt.

Zum Zeitpunkt t6 werden die Werkstücke 1 auf die Temperatur T0 abgeschreckt, die wiederum im Bereich der Raumtemperatur liegen kann oder auch darunter. Wie in Figur 2 durch eine gestrichelte Linie angedeutet, kann das Abschrecken auch auf Temperaturen von -50°C oder darunter erfolgen. Das Abschrecken kann beispielsweise mittels Öl oder Gas derart erfolgen, dass die in Abhängigkeit von der Legierungszusammensetzung kritische Abkühlgeschwindigkeit überschritten wird. Die Abkühlung dauert beispielsweise maximal 2 Minuten. Durch das Abschrecken kommt es in der Randzone 3 der Werkstücke 1 zu einer Gefügeumwandlung, wobei insbesondere Martensit gebildet wird. In der Kernzone 2 der Werkstücke 1 wird beim Abschrecken allenfalls in einem sehr geringen Ausmaß Martensit gebildet. Der Martensitgehalt in der Randzone 3 ist daher nach dem Zeitpunkt t6 deutlich höher als in der Kernzone 2.

Nach dem Abschrecken zum Zeitpunkt t6 werden die Werkstücke 1 mindestens bis zur Einstellung einer über den Werkstückquerschnitt gleichmäßigen Temperaturverteilung bei der Temperatur T0 gehalten und anschließend ab einem Zeitpunkt t7 erwärmt, bis zu einem Zeitpunkt t8 eine Temperatur T3 erreicht ist. Falls zu sehr tiefen Temperaturen abgeschreckt wurde, folgt anstelle eines Haltens bei der Temperatur T0 ein Tiefkühlen und danach das Aufheizen auf die Temperatur T3.

Bei der Temperatur T3, die in einem Temperaturbereich zwischen 150°C und 300°C liegen kann, werden die Werkstücke 1 für etwa 1 Stunde bis 4 Stunden angelassen und dadurch der in den Werkstücken 1 enthaltene Martensit stabilisiert.

Zu einem Zeitpunkt t9 ist das Anlassen beendet und die Werkstücke 1 werden bis zu einem Zeitpunkt t10 auf die Temperatur T0, vorzugsweise Raumtemperatur, abgekühlt. Dieses Abkühlen kann deutlich langsamer als das Abschrecken zum Zeitpunkt t6 erfolgen. Mit dem Abkühlen ist die in Figur 2 dargestellte Wärmebehandlung beendet. Es können sich dann noch weitere Wärmebehandlungsschritte anschließen, die in Figur 2 nicht dargestellt sind. Ebenso ist es auch möglich, dass die Wärmebehandlung zum Zeitpunkt t10 vollständig abgeschlossen ist.

Die in der vorstehend beschriebenen Weise oder in ähnlicher Weise gemäß der Erfindung wärmebehandelten Werkstücke 1 weisen in der Randzone 3 als Hauptbestandteil ein Mischgefüge aus Martensit und Bainit und in der Kernzone 2 als Hauptbestandteil ein Bainit-Gefüge auf. Der Anteil des Martensit- bzw. des Bainit-Gefüges kann dabei jeweils aus dem Volumen an Martensit bzw. Bainit in der Kernzone 2 oder der Randzone 3 bezogen auf das Gesamtvolumen der Kernzone 2 oder der Randzone 3 ermittelt werden. In analoger Weise können die Anteile der weiteren Bestandteile ermittelt werden. Es handelt sich somit bei dem Gehalt jeweils um eine mittlere Volumenkonzentration, die im Folgenden jeweils als Prozentzahl mit dem Kürzel Vol.-% angegeben wird. Das ebenfalls verwendete Kürzel Gew.-% bezeichnet in analoger Weise eine mittlere Massenkonzentration.

Nach der Wärmebehandlung kann die Randzone 3 der Werkstücke 1 einen Martensitgehalt von wenigstens 20 Vol.-% aufweisen. Der Bainitgehalt kann maximal 70 Vol.-% betragen. Der Gehalt an Restaustenit kann wenigstens 10 Vol.-% betragen. Insbesondere kann der Gehalt an Restaustenit in der Randzone 3 um 5 bis 40 Vol.-% höher sein als in der Kernzone 2. Weiterhin kann die Randzone 3 einen Stickstoffgehalt zwischen 0,1 und 0,8 Gew.-%, und einen Kohlenstoffgehalt zwischen 0,8 und 1,2 Gew.-% aufweisen. Der Kohlenstoff kann wenigstens teilweise in Form von Carbiden vorliegen. Dabei kann eine unmittelbar an die Oberfläche der Werkstücke 1 angrenzende Schicht, die eine Dicke bis zu 250 µm aufweist, frei von Carbiden sein. In einer weiteren Schicht der Randzone 3, die zwischen der carbidfreien Schicht und der Kernzone 2 angeordnet ist, können Carbide enthalten sein.

Die Oberflächenhärte der Randzone 3 kann wenigstens 60 HRC betragen. Zudem kann die Härte der Randzone 3 um wenigstens 50 HV1 über der Härte der Kernzone 2 liegen. Weiterhin können in der Randzone 3 Druckeigenspannungen in einem Bereich zwischen -600 MPa und -100 MPa ausgebildet sein.

Die Kernzone 2 kann ein größeres Volumen aufweisen als die Randzone 3. In der Kernzone 2 kann der Martensitgehalt nach der Wärmebehandlung maximal 10 Vol.-% betragen. Der Bainitgehalt kann wenigstens 80 Vol.-% betragen. Der Gehalt an Restaustenit kann maximal 10 Vol.-% betragen. Insbesondere ist es auch möglich, dass der Gehalt an Restaustenit maximal 3 Vol.-% beträgt. Die Kernzone 2 kann zudem Karbide enthalten.

## Patentansprüche

1. Wälzbeanspruchtes Werkstück (1) mit einer Kernzone (2) und einer carbonitrierten Randzone (3), welche die Kernzone (2) umgibt, wobei
- das Werkstück (1) aus einem durchhärtenden Stahl gefertigt ist und
- die Kernzone (2) als Hauptbestandteil ein Bainit-Gefüge aufweist,
**dadurch gekennzeichnet, dass** die Randzone (3) ein Mischgefüge aus Martensit und Bainit aufweist und der Volumenanteil des Martensits in der Randzone wenigstens 20 Vol.-% beträgt und die Randzone (3) einen Restaustenitgehalt aufweist, der um 5 Vol.-% bis 40 Vol.-% höher ist als der Restaustenitgehalt der Kernzone.

2. Werkstück nach Anspruch 1, **dadurch gekennzeichnet, dass** die Randzone (3) das Mischgefüge aus Martensit und Bainit als Hauptbestandteil aufweist.

3. Werkstück nach einem der vorhergehenden Ansprüche, **dadurch gekennzeichnet, dass** die Kernzone (2) Karbide und/oder Restaustenit enthält.

4. Werkstück nach einem der vorhergehenden Ansprüche, **dadurch gekennzeichnet, dass** die Randzone (3) Karbide und/oder Restaustenit und/oder Bainit und/oder Nitride enthält.

5. Werkstück nach einem der vorhergehenden Ansprüche, **dadurch gekennzeichnet, dass** die Randzone (3) an die Oberfläche des Werkstücks (1) angrenzt.

6. Werkstück nach einem der vorhergehenden Ansprüche, **dadurch gekennzeichnet, dass** die Kernzone (2) ein größeres Volumen aufweist als die Randzone (3).

7. Werkstück nach einem der vorhergehenden Ansprüche, **dadurch gekennzeichnet, dass** die Randzone (3) eine Härte aufweist, die wenigstens um 50HV1 über der Härte der Kernzone (2) liegt.

8. Werkstück nach einem der vorhergehenden Ansprüche, **dadurch gekennzeichnet, dass** die Randzone (3) eine erste Schicht aufweist, die frei von Karbiden ist.

9. Werkstück nach Anspruch 8, **dadurch gekennzeichnet, dass** die erste Schicht an die Werkstückoberfläche angrenzt.

10. Werkstück nach einem der vorhergehenden Ansprüche, **dadurch gekennzeichnet, dass** die Randzone (3) eine zweite Schicht aufweist, die Karbide enthält.

11. Werkstück nach Anspruch 10, **dadurch gekennzeichnet, dass** die zweite Schicht zwischen der ersten Schicht und der Kernzone (2) angeordnet ist.

12. Verfahren zur Wärmebehandlung von wälzbeanspruchten Werkstücken (1) aus durchhärtendem Stahl, wobei
- eine Randzone (3) der Werkstücke (1) carbonitriert wird,
- in einer Kernzone (2) der Werkstücke (1), die von der Randzone (3) umschlossen wird, durch Lagern der Werkstücke (1) nach dem Austenitisieren während eines ersten Zeitintervalls innerhalb eines ersten Temperaturbereichs eine Umwandlung in ein Gefüge durchgeführt wird, das als Hauptbestandteil Bainit enthält, **dadurch gekennzeichnet, dass** nach dem ersten Zeitintervall in der Randzone (3) der Werkstücke (1) eine Umwandlung in ein Gefüge durchgeführt wird, das einen Volumenanteil an Martensit von wenigstens 20 Vol.-% enthält, indem die Werkstücke (1) von einer Temperatur im ersten Temperaturbereich auf eine Temperatur in einem zweiten Temperaturbereich so schnell abgekühlt werden, dass die legierungsabhängige kritische Abkühlgeschwindigkeit überschritten wird, und in der Randzone ein Restaustenitgehalt ausgebildet wird, der um 5 Vol.-% bis 40 Vol.% höher ist als der Restaustenitgehalt in der Kernzone.

13. Verfahren nach Anspruch 12, **dadurch gekennzeichnet, dass** die Werkstücke (1) während eines zweiten Zeitintervalls innerhalb des zweiten Temperaturbereichs gelagert werden.

14. Verfahren nach Anspruch 13, **dadurch gekennzeichnet, dass** die Werkstücke (1) auf eine Temperatur innerhalb eines dritten Temperaturbereichs erwärmt werden und innerhalb eines dritten Zeitintervalls bei einer Temperatur innerhalb des dritten Temperaturbereichs angelassen werden.

15. Verfahren nach einem der Ansprüche 13 oder 14, **dadurch gekennzeichnet, dass** das zweite Zeitintervall so eingestellt wird, dass sich über den Werkstückquerschnitt eine gleichmäßige Temperaturverteilung ergibt.

## Claims

1. Workpiece (1) which is subject to rolling stresses and has a core zone (2) and a carbonitrided surface zone (3) which surrounds the core zone (2), wherein
- the workpiece (1) is made from a fully hardening steel, and
- the core zone (2) has a bainite microstructure as its main constituent,
**characterized in that** the surface zone (3) has a mixed microstructure comprising martensite and bainite and the martensite in the surface zone constitutes a proportion of at least 20% by volume and the surface zone (3) has a retained austenite content that is 5% by volume to 40% by volume higher than the retained austenite content of the core zone.

2. Workpiece according to Claim 1, **characterized in that** the surface zone (3) has the mixed microstructure comprising martensite and bainite as its main constituent.

3. Workpiece according to one of the preceding claims, **characterized in that** the core zone (2) contains carbides and/or retained austenite.

4. Workpiece according to one of the preceding claims, **characterized in that** the surface zone (3) contains carbides and/or retained austenite and/or bainite and/or nitrides.

5. Workpiece according to one of the preceding claims, **characterized in that** the surface zone (3) is adjacent to the surface of the workpiece (1).

6. Workpiece according to one of the preceding claims, **characterized in that** the core zone (2) has a greater volume than the surface zone (3).

7. Workpiece according to one of the preceding claims, **characterized in that** the surface zone (3) has a hardness that is at least 50HV1 above the hardness of the core zone (2).

8. Workpiece according to one of the preceding claims, **characterized in that** the surface zone (3) has a first layer that is free of carbides.

9. Workpiece according to Claim 8, **characterized in that** the first layer is adjacent to the workpiece surface.

10. Workpiece according to one of the preceding claims, **characterized in that** the surface zone (3) has a second layer which contains carbides.

11. Workpiece according to Claim 10, **characterized in that** the second layer is arranged between the first layer and the core zone (2).

12. Process for the heat treatment of workpieces (1) that are subject to rolling stresses and are made from fully hardening steel, wherein
- a surface zone (3) of the workpieces (1) is carbonitrided,
- in a core zone (2) of the workpieces (1), which is surrounded by the surface zone (3), a transformation into a microstructure that contains bainite as its main constituent is effected by holding the workpieces (1), after the austenitizing, within a first temperature range for a first period of time, **characterized in that** after the first period of time, in the surface zone (3) of the workpieces (1), a transformation is carried out into a microstructure which has a martensite content of at least 20% by volume, while cooling the workpieces (1) from a temperature in the first temperature range to a temperature in a second temperature range sufficiently quickly to exceed the alloy-dependent critical cooling rate, and there is formed in the surface zone a retained austenite content that is 5% by volume to 40% by volume higher than the retained austenite content in the core zone.

13. Process according to Claim 12, **characterized in that** the workpieces (1) are held within the second temperature range for a second period of time.

14. Process according to Claim 13, **characterized in that** the workpieces (1) are heated to a temperature within a third temperature range and are tempered at a temperature within the third temperature range for a third period of time.

15. Process according to one of Claims 13 and 14, **characterized in that** the second period of time is set in such a way that a uniform temperature distribution results over the cross section of the workpiece.

## Revendications

1. Pièce (1) traitée par laminage, présentant une zone d'âme (2) et une zone carbonitrurée de bordure (3) qui entoure la zone d'âme (2),
- la pièce (1) étant réalisée en un acier durci à coeur et
- la zone d'âme (2) présente comme composant principal un réseau de bainite,
**caractérisée en ce que**
la zone de bordure (3) présente un réseau mixte de martensite et de bainite, la proportion en volume de la martensite dans la zone de bordure étant d'au moins 20 % en volume et la zone de bordure (3) présentant une teneur résiduelle en austénite supérieure de 5 % en volume à 40 % en volume à la teneur en austénite résiduelle de la zone d'âme.

2. Pièce selon la revendication 1, **caractérisée en ce que** la zone de bordure (3) présente comme composant principal un réseau mixte de martensite et de bainite.

3. Pièce selon l'une des revendications précédentes, **caractérisée en ce que** la zone d'âme (2) contient des carbures et/ou de l'austénite résiduelle.

4. Pièce selon l'une des revendications précédentes, **caractérisée en ce que** la zone de bordure (3) contient des carbures et/ou de l'austénite résiduelle et/ou de la bainite et/ou des nitrures.

5. Pièce selon l'une des revendications précédentes, **caractérisée en ce que** la zone de bordure (3) est adjacente à la surface de la pièce (1).

6. Pièce selon l'une des revendications précédentes, **caractérisée en ce que** la zone d'âme (2) présente un volume plus grand que la zone de bordure (3).

7. Pièce selon l'une des revendications précédentes, **caractérisée en ce que** la zone de bordure (3) présente une dureté supérieure d'au moins 50 HV1 à la dureté de la zone d'âme (2).

8. Pièce selon l'une des revendications précédentes, **caractérisée en ce que** la zone de bordure (3) présente une première couche exempte de carbures.

9. Pièce selon la revendication 8, **caractérisée en ce que** la première couche est adjacente à la surface de la pièce.

10. Pièce selon l'une des revendications précédentes, **caractérisée en ce que** la zone de bordure (3) présente une deuxième couche qui contient des carbures.

11. Pièce selon la revendication 10, **caractérisée en ce que** la deuxième couche est disposée entre la première couche et la zone d'âme (2).

12. Procédé de traitement thermique de pièces (1) en acier durci à coeur et traitées par laminage, dans lequel
- une zone de bordure (3) des pièces (1) est carbonitrurée,
- dans une zone d'âme (2) de la pièce (1) entourée par la zone de bordure (3), une conversion en un réseau qui contient de la bainite comme composant principal est réalisée en entreposant les pièces (1) pendant un premier intervalle de temps et dans une première plage de température après l'austénitisation,
**caractérisé en ce que**
après le premier intervalle de temps, on réalise dans la zone de bordure (3) des pièces (1) une conversion en un réseau qui contient une proportion volumique de martensite d'au moins 20 % en volume en refroidissant les pièces (1) depuis une température située dans la première plage de température jusqu'à une température située dans une deuxième plage de température suffisamment rapidement pour que soit dépassée la vitesse de refroidissement critique qui dépend de l'alliage et de manière à former dans la zone de bordure une teneur résiduelle en austénite supérieure de 5 % en volume à 40 % en volume à la teneur en austénite résiduelle de la zone d'âme.

13. Procédé selon la revendication 12, **caractérisé en ce que** les pièces (1) sont entreposées dans la deuxième plage de température pendant le deuxième intervalle de temps.

14. Procédé selon la revendication 13, **caractérisé en ce que** les pièces (1) sont chauffées à une température située à l'intérieur d'une troisième plage de température et subissent un revenu pendant un troisième intervalle de temps à une température située à l'intérieur de la troisième plage de température.

15. Procédé selon l'une des revendications 13 ou 14, **caractérisé en ce que** le deuxième intervalle de temps est réglé de telle sorte que l'on obtienne une répartition uniforme de température sur la section transversale de la pièce.
